Europäisches Patentamt

European Patent Office

Office européen des brevets

(11) Veröffentlichungsnummer: **0 265 804**

**A2**

(12) **EUROPÄISCHE PATENTANMELDUNG**

(21) Anmeldenummer: **87115222.9**

(22) Anmeldetag: **17.10.87**

(51) Int. Cl.4: **G01N 30/60**

(30) Priorität: **27.10.86 DE 3636490**

(43) Veröffentlichungstag der Anmeldung:
**04.05.88 Patentblatt 88/18**

(84) Benannte Vertragsstaaten:
**CH FR GB LI SE**

(71) Anmelder: **Labomatic AG**
**Baslerstrasse 96**
**CH-4123 Allschwil(CH)**

(72) Erfinder: **Marchand, Claude**
**Baselstrasse 14**
**CH-4124 Schönenbuch(CH)**
Erfinder: **Schoohf, Michael**
**Heuwinkelstrasse 14**
**CH-4123 Allschwil(CH)**

(74) Vertreter: **Blum, Rudolf Emil Ernst et al**
**c/o E. Blum & Co Patentanwälte Vorderberg**
**11**
**CH-8044 Zürich(CH)**

(54) **Abschlusseinrichtung für eine Säule für die Chromatographie.**

(57) Die Abschlusseinrichtung hat ein Abschlussorgan (3), das mittels eines Stellringes (6) relativ zur Säule (1) axial verstellbar ist. Durch eine Gewindehülse (4) und einen darin eingeschraubten Gewindering (5), die den Stellring (6) einschliessen, wird das Abschlussorgan (3) einerseits an der Säule (1) gehalten und ist andererseits durch Drehen des Stellringes (6) verstellbar. Somit können die Anschlussstellen der Fertigsäule an ein bestehendes Leitungssystem angepasst werden.

EP 0 265 804 A2

## Abschlusseinrichtung für eine Säule für die Chromatographie

Die Erfindung betrifft eine Abschlusseinrichtung gemäss dem Oberbegriff des Patentanspruches 1.

Zum Abschliessen von Chromatographie-Säulen sind verschiedene Ausführungsformen bekannt geworden.

Bei der in der DE-OS 21 32 686 beschriebenen Fertigsäule erfolgt dies durch einen Verschlussstopfen, der eine Kapillare trägt und am Umfang mit elastischen Lippen versehen ist. Diese Lippen haben einen geringfügig grösseren Aussendurchmesser und sollen sich zum äusseren Ende des Verschlussstopfens hin öffnen. Um das Herausdrücken des Verschlussstopfens zu verhindern, kann eine Versiegelung mittels einer Vergussmasse vorgesehen werden.

Die Nachteile dieser Ausführungsform sind darin zu sehen, dass sowohl das Auswechseln als auch die Anpassung in das Leitungssystem umständlich und zeitraubend sind.

Aus der CH-PS 509 591 ist eine Abschlusseinrichtung bekannt, bei der ein Pfropfen von zwei gummielastischen Dichtungsringen umgeben ist. Zwischen diesen ist eine Distanzhülse angeordnet. Ferner ist ein Pressglied vorgesehen, das relativ zum Pfropfen verstellbar ist, um die Dichtungsringe gegen die Rohrinnenwand zu drücken.

Als Nachteile dieser Abschlusseinrichtung sind ihr komplizierter Aufbau und Montage sowie die aufwendige Anpassung in das Leitungssystem zu nennen.

In der US-PS 4 131 547 ist eine Fertigsäule für die Chromatographie beschrieben, bei der der Pfropfen in die Säule eingeschraubt ist.

Als Nachteil ist hier die kostspielige Ausbildung des Endabschnittes der Säule zu nennen.

Hier will die Erfindung Abhilfe schaffen. Die Erfindung, wie sie in den Ansprüchen gekennzeichnet ist, löst die Aufgabe eine Abschlusseinrichtung für eine Säule für die Chromatographie zu -schaffen, die im montierten Zustand die Möglichkeit bietet das Abschlussorgan unter vollem Systemdruck relativ zur Säule axial zu verschieben, um eventuell entstandenes Totvolumen auszugleichen und die fertig montierte Säule an ein Leitungssystem einfach anzupassen.

Die Vorteile der Erfindung sind im wesentlichen im einfachen Aufbau und der einfachen Handhabung der Abschlusseinrichtung zu sehen.

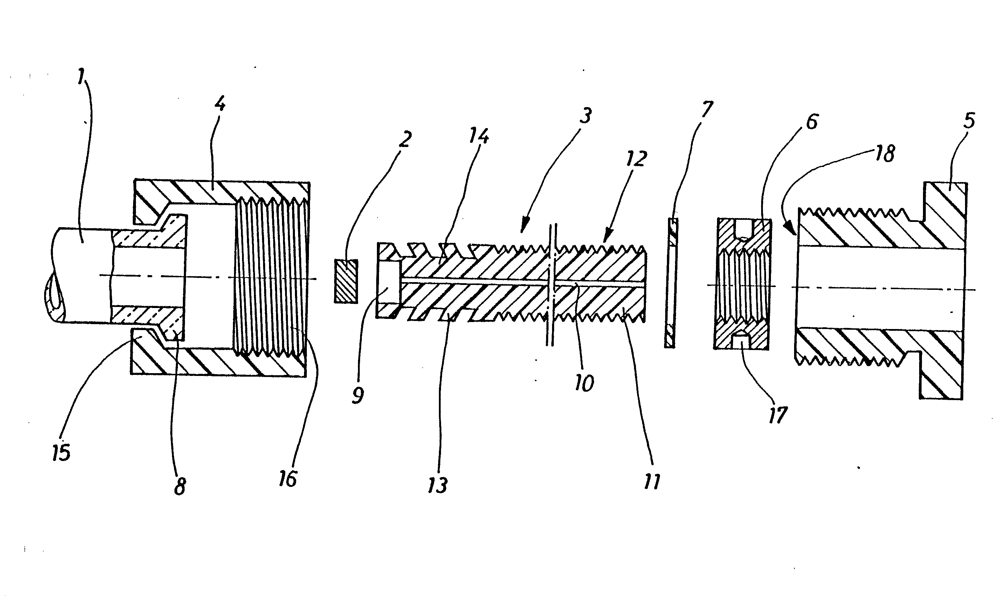

Im folgenden wird die Erfindung anhand der beiliegenden Zeichnung erläutert, die ein Ausführungsbeispiel der Anschlusseinrichtung in auseinandergezogener Darstellung zeigt.

Die in der Figur dargestellte Abschlusseinrichtung ist in das Ende einer Säule 1 einführbar und gehalten. Die Abschlusseinrichtung enthält einen Sinterkörper 2, ein Abschlussorgan 3, eine Gewindehülse 4, einen Gewindering 5, einen Stellring 6 und eine Unterlagscheibe 7. Am Endabschnitt der Säule 1 ist ein Flansch 8 ausgebildet, an der die Abschlusseinrichtung gehalten ist. Das Abschlussorgan 3 hat eine Ausnehmung 9 zur Aufnahme des Sinterkörpers 3 und eine Durchgangsbohrung 10 in Längsrichtung. Das Abschlussorgan 3 ist ein länglicher zylindrischer Körper, z.B. aus einem Kunststoff, der ausgehend von einem Ende einen mit einem Aussengewinde 11 versehenen ersten Abschnitt 12 und angrenzend an diesen einen mit Dichtungsmittel versehenen zweiten Abschnitt 14 aufweist. Die Dichtungsmittel werden durch Dichtungslippen 13 gebildet, die am zweiten Abschnitt 14 ausgebildet sind und sich zum innenliegenden Ende des Abschlussorgans 3 öffnen.

Auf dem Endabschnitt der Säule 1 ist die Gewindehülse 4 angeordnet. Hierzu ist eine nicht dargestellte Ausnehmung so vorgesehen, dass die Gewindehülse 4 von der Seite her auf den Endabschnitt der Säule aufgesteckt werden kann. Die Gewindehülse weist an einem Ende einen nach innen vorstehenden Abschnitt 15, der bei montierter Abschlusseinrichtung an dem Flansch 8 der Säule 1 anliegt und am anderen Ende ein Innengewinde 16 auf, in das der Gewindering 5 einschraubbar ist.

Der Stellring 6 hat ein Innengewinde und ist am Umfang mit Löchern 17 versehen, um den Stellring 6 auf dem Abschlussorgan 3 zu verstellen. Der Stellring 6 besteht z.B. aus Metall.

Beim Montieren der Abschlusseinrichtung wird zuerst die Gewindehülse 4 auf die Säule 1 aufgesteckt. Dann wird das Abschlussorgan 3 mit dem Sinterkörper 2 und dem zweiten Abschnitt 13 voran in die Säule 1 hineingedrückt. Um das Hineindrücken zu erleichtern, kann der Stellring 6 vorher auf den ersten Abschnitt 11 aufgeschraubt werden. Dabei ist zu beachten, dass in diesem Fall die Unterlagscheibe 7 vorher auf das Abschlussorgan 3 aufgesteckt wird. Anschliessend wird der Gewindering 5 in die Gewindehülse 4 eingeschraubt, wodurch einerseits der Abschnitt 15 der Gewindehülse 4 am Flansch 8 der Säule 1 anliegt und der Stellring 6 andererseits in einem durch die Stirnkante 18 des Gewinderinges 5 und der Oberfläche der auf der Säule 1 aufliegenden Unterlagscheibe 7 gebildeten Raum angeordnet ist. Somit wird die Stellung des Abschlussorgans 3 zur Säule 1 durch den Stellring 6 bestimmt und kann durch Drehen des Stellringes 6 verändert werden. Dadurch können die Anschlussstellen der Fertigsäule an ein bestehendes Leitungssystem angepasst werden.

## Ansprüche

1. Abschlusseinrichtung für eine Säule für die Chromatographie mit einem Sinterkörper, einem Abschlussorgan, das in die Säule einsteckbar ist und den Sinterkörper hält, einer mit Innengewinde versehenen Gewindehülse, die eine Ausnehmung, um die Säule einzuführen, und einen Abschnitt aufweist, der mit der Säule in Anlage bringbar ist, um die Gewindehülse an der Säule zu halten, und einem Gewindering, der in die Gewindehülse eingeschraubt ist und zusammen mit dieser das Abschlussorgan an der Säule hält, dadurch gekennzeichnet, dass das Abschlussorgan (3) einen mit Aussengewinde (11) versehenen ersten Abschnitt (12) und angrenzend an diesen einen mit Dichtungsmittel (14) versehenen zweiten Abschnitt (13) aufweist, der in die Säule (1) einsteckbar ist, und dass ein Stellring (6) auf dem Abschlussorgan (3) aufgeschraubt und zwischen der Gewindehülse und dem Gewindering so angeordnet ist, dass der Stellring (6) drehbar am Säulenende (8) gehalten ist, um das Abschlussorgan (3) in axialer Richtung bezüglich der Säule (1) zu verschieben.

2. Einrichtung nach Anspruch 1, dadurch gekennzeichnet, dass das Dichtungsmittel mindestens eine Dichtungslippe (14) ist, die am zweiten Abschnitt (13) ausgebildet ist.

3. Einrichtung nach Anspruch 2, dadurch gekennzeichnet, dass eine Anzahl von Dichtungslippen (14) vorgesehen sind, die nebeneinanderliegend ausgebildet sind.

4. Einrichtung nach einem der Ansprüche 2 oder 3, dadurch gekennzeichnet, dass die Dichtungslippe (14) schräg zur Achse des Abschlussorgans (1) geneigt ausgebildet ist.

5. Einrichtung nach Anspruch 4, dadurch gekennzeichnet, dass die Dichtungslippe (14) in Richtung des zum Einstecken bestimmten Abschlussorganendes geneigt ausgebildet ist.

6. Einrichtung nach Anspruch 1, dadurch gekennzeichnet, dass eine Unterlagscheibe (7) zwischen dem Säulenende (8) und dem Stellring (6) vorgesehen ist.

7. Einrichtung nach Anspruch 1, dadurch gekennzeichnet, dass die Gewindehülse (4) und der Gewindering (5) aus Kunststoff besteht.

8. Einrichtung nach Anspruch 1, dadurch gekennzeichnet, dass der Stellring (6) aus Metall besteht.